(19) Europäisches Patentamt
European Patent Office
Office européen des brevets

(11) EP 3 375 812 B1

(12) **EUROPÄISCHE PATENTSCHRIFT**

(45) Veröffentlichungstag und Bekanntmachung des Hinweises auf die Patenterteilung:
**24.04.2024 Patentblatt 2024/17**

(21) Anmeldenummer: **18161620.2**

(22) Anmeldetag: **13.03.2018**

(51) Internationale Patentklassifikation (IPC):
***C08J 9/08*** *(2006.01)* ***C08J 9/14*** *(2006.01)*
***C08G 59/66*** *(2006.01)* ***C08L 63/00*** *(2006.01)*

(52) Gemeinsame Patentklassifikation (CPC):
**C08J 9/0061; C08G 59/1483; C08J 9/08; C08J 9/122; C08J 9/127; C08J 9/142; C08J 9/145; C08J 9/146;** C08J 2203/02; C08J 2203/06; C08J 2203/12; C08J 2203/142; C08J 2203/182; C08J 2203/184; C08J 2203/204; (Forts.)

(54) **THIO-EPOXIDHARZE UND VERFAHREN ZU IHRER HERSTELLUNG**
THIO EPOXY RESINS AND METHOD FOR PREPARATION
RÉSINES THIO-ÉPOXY ET SON PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.03.2017 DE 102017105312**

(43) Veröffentlichungstag der Anmeldung:
**19.09.2018 Patentblatt 2018/38**

(73) Patentinhaber:
- **Performance Chemicals Handels GmbH
21244 Buchholz (DE)**
- **Klockemann, Werner
21244 Buchholz (DE)**

(72) Erfinder: **Klockemann, Werner
21244 Buchholz (DE)**

(74) Vertreter: **Müller Schupfner & Partner
Patent- und Rechtsanwaltspartnerschaft mbB
Schellerdamm 19
21079 Hamburg (DE)**

(56) Entgegenhaltungen:
**EP-A1- 0 870 790**
**WO-A1-2014/072334**
**DE-A1-102012 223 515**

EP 3 375 812 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
C08J 2363/00; C08J 2363/02; C08J 2463/00;
C08J 2483/12

## Beschreibung

Die vorliegende Erfindung betrifft Thio-Epoxidharze erhältlich aus der Umsetzung von zumindest Polyepoxid-Verbindungen aufweisend zwei Epoxid-Gruppen und aromatische und/oder cycloaliphatische Gruppen, aliphatischen Epoxid-Verbindungen und Polythiol-Verbindungen mit mindestens zwei Mercaptan-Gruppen in Gegenwart von Carbonat-Verbindungen und/oder einem physikalischen Treibmittel zur Herstellung von zelligen oder geschäumten Produkten für den Einsatz als Elastomere, Profildichtungen, Vergussmassen, Klebstoffe oder Schaumstoffe und ein Verfahren zu deren Herstellung.

Die Härtung von Epoxidharzen bzw. Polyepoxiden mit Polythiolen ist bekannt und wird z. B. in der US 2789958 beschrieben. Die Härtung der Polyepoxide mit Polythiolen erfordert in der Regel eine Beschleunigung oder die Verwendung spezieller Polythiole mit eingebauter Aktivierung, siehe z. B. US 3355512. Zur Herstellung von Klebstoffen sollte die Gelzeit solcher Systeme gesteuert werden können, wozu eine Kombination von Beschleuniger und Peroxiden vorgeschlagen wird, siehe z. B. WO 2013/053100.

Die Umsetzung von Epoxid-Verbindungen mit Polythiol-Verbindungen in Gegenwart von aminischen Katalysatoren und eines physikalischen Treibmittels ist in Form einer nicht näher ausgeführten Alternative aus der EP 0870790 A1 bekannt. Mit den dort angegebenen Zusammensetzungen können zellige Produkte nur in Mehr-Komponenten-Systemen, jedoch nicht in Zwei-Komponenten-Systemen, auf Grund der Reaktion der Amine (auch tertiärer Amine) mit den SH-Gruppen, hergestellt werden, wobei die als Dichtung vorgesehenen Reaktionsprodukte durch Zusatz des physikalischen Treibmittels in Form von Lösungsmitteln ohne Stabilisierung nur zu höherer Rohdichte der Produkte führen können.

Die Herstellung von Intumeszenz-Schichten unter Verwendung von Epoxyd-Polythiol-Systemen mit Verbindungen wie Melamin oder Guanidin führt nach der DE 102012223515 A1 erst bei Temperaturen oberhalb 280°C zu einem Aufschäumen und damit zur Schaumbildung (d.h. im Brandfall). WO 2014/072334 A1 offenbart expandierbare Kautschuk-modifizierte Epoxyharze, welche auf allgemeinen Epoxidharzen, jedoch nicht auf Thio-Epoxidharzen beruhen.

Aus den bisherigen Arbeiten ergeben sich zumindest drei Probleme, für die keine zufrieden stellenden Lösungen bekannt sind:

- die bequeme Einstellung der Verarbeitungszeiten von Epoxid-Thiol-Systemen,
- die einfache Herstellung von Schaumstoffen niedriger Dichte oder zelligen Produkten mittels einfacher und lagerstabiler Zusammensetzungen, und
- der Einsatz von epoxidierten Naturprodukten wegen deren geringer Reaktionsfähigkeit, da diese auch bei hohen Katalysatorzugaben in der Umsetzung mit Thiolen nach dem bekannten Stand der Technik nur schlecht aushärten.

Aufgabe der Erfindung ist es, ein Verfahren zur Herstellung von Thio-Epoxidharzen zur Verfügung zu stellen, mit denen eine schnelle Umsetzung auch mit epoxidierten Naturprodukten möglich ist und geschäumte Thio-Epoxidharze auch im niedrigen Dichtebereich von z. B. kleiner gleich 100 kg/m$^3$, insbesondere kleiner gleich 60 kg/m$^3$, bzw. zellige Thio-Epoxidharze zugänglich werden.

Erfindungsgemäß wird die Aufgabe gelöst durch den Gegenstand der unabhängigen Patentansprüche. Bevorzugte Ausführungsformen sind Gegenstand der Unteransprüche oder nachfolgend beschrieben.

Das erfindungsgemäße Verfahren umfasst die Umsetzung von

(a) mindestens einer Polyepoxid-Verbindung mit mindestens zwei Epoxid-Gruppen pro Molekül aufweisend aromatische und/oder cycloaliphatische Gruppen (nachfolgend kurz "Polyepoxid-Verbindung"),
(b) eine aliphatische Epoxid-Verbindung mit mindestens 14 Kohlenstoffatomen aufweisend mindestens eine Epoxid-Gruppe (nachfolgend kurz "aliphatische Epoxid-Verbindung"),
(c) mindestens eine Polythiol-Verbindung mit mindestens zwei Mercaptan-Gruppen (nachfolgend kurz "Polythiol-Verbindung")
in Gegenwart von
(d) mindestens einer basischen Verbindung als Katalysator und
(e) mindestens einer Carbonat-Verbindung (e1) und/oder eines physikalischen Treibmittels (e2), wobei als physikalisches Treibmittel Substanzen eingesetzt werden, die bei -10 bis 80°C von dem flüssigen oder gelösten Zustand in den gasförmigen Zustand übergehen,

wobei zellige oder geschäumte Thio-Epoxidharze erhältlich sind. Die zelligen Thio-Epoxidharze, auch Produkte genannt, sind ebenfalls Gegenstand der Erfindung. Die geschäumten Thio-Epoxidharze, auch Produkte genannt, weisen z.B. Raumdichten von 5 bis 100 kg/m$^3$, vorzugsweise 20 bis 60 kg/m$^3$, besonders bevorzugt 10 bis 50 kg/m$^3$ auf.

Es sind aber auch zellige Produkte wie Elastomere oder Dichtungen, insbesondere Profildichtungen, so herstellbar aufweisend jeweils eine Raumdichte von 100 bis 600 kg/$m^3$oder mikrozellulare Vergussmasse aufweisend eine Raumdichte von größer 600 bis 950 kg/$m^3$.

Überraschend wurde gefunden, dass durch eine Mischung von Epoxid-Verbindungen unter Zusatz zumindest einer Carbonat-Verbindung und/oder zumindest einem physikalischen Treibmittel verbesserte Eigenschaften der dadurch hergestellten Polymere erzielt werden und andererseits die Reaktionsgeschwindigkeit durch die erfindungsgemäßen Katalysatoren und das Verhältnis der Epoxyd-Verbindung (a) zu der Epoxyd-Verbindung (b) exakt eingestellt werden kann. Darüber hinaus kann bei Einsatz der Carbonat-Verbindungen erreicht werden, dass bei der Reaktion Kohlendioxid abgespalten wird und dadurch zellige oder geschäumte Produkte hergestellt werden. Die Schäumung erfolgt insbesondere durch Carbonate und/oder physikalische Treibmittel, kann aber auch ausschließlich durch externe physikalische Treibmittel oder nur durch Carbonate erfolgen.

Insbesondere ist die Erfindung darauf gerichtet, durch Zusammenbringen von zumindest

(a) 10 bis 65 Gew.-Teilen der Polyepoxid-Verbindung,
(b) 5 bis 70 Gew.-Teilen der aliphatischen Epoxid-Verbindung,
(c) der Polythiol-Verbindung in einer Menge so, dass sich eine Kennzahl von 50 bis 120, insbesondere 70 bis 100, ergibt,
in Gegenwart von
(d) 0,001 bis 5 Gew.-Teilen des basischen Katalysators und

(e1) 0,2 bis 35 Gew.-Teilen, vorzugsweise 5 bis 20 Gew.-Teilen oder auch 1 bis 10 Gew.-Teilen, der Carbonat-Verbindung und/ oder
(e2) einem physikalischen Treibmittel, wobei als physikalisches Treibmittel Substanzen eingesetzt werden, die bei -10 bis 80°C von dem flüssigen oder gelösten Zustand in den gasförmigen Zustand übergehen,

zellige Thio-Epoxidharze herzustellen, wobei sich die Angaben von (a)+(b)+(c)+(d)+(e1)+(e2) sich vorzugsweise zu 100 Gew.-Teilen ergänzen.

Zur Herstellung der erfindungsgemäßen Polymere werden die reaktiven Gruppen -SH einerseits und die Epoxy-Gruppen andererseits im stöchiometrischen Verhältnis zwischen 0,5 : 1 bis 1,2 : 1 umgesetzt, woraus sich eine Kennzahl oder ein Index K nach

$$K = \frac{\text{-SH}}{\text{Epoxy}} \times 100$$

errechnet. Bevorzugt ist eine etwa äquimolare Umsetzung (Kennzahl 100).

Die Umsetzungen werden bevorzugt mit Gemischen hergestellt, die ein Verhältnis von Polyepoxid-Verbindungen (a) zu aliphatischen Epoxid-Verbindungen (b) aufweisen, das einmal der gewünschten Reaktionszeit entspricht und zum anderen die gewünschten mechanischen Eigenschaften aufweist. Sind als Umsetzungsprodukt harte Schäume gewünscht, beträgt das Gew.-Verhältnis (a) zu (b) von 4 : 1 bis 1.1 : 1, für weiche Schäume ist das Gew.-Verhältnis (a) zu (b) von 1 : 1 bis 1: 4 bevorzugt.

Das Verhältnis der Epoxydverbindung (a) zu (b) ist außerdem im Hinblick auf die Einstellung der Reaktionszeiten von Bedeutung. Bei herkömmlicher Katalyse mit üblichen tertiären Aminen als Katalysatoren werden die Epoxydgruppen der Verbindungen (b) kaum oder gar nicht katalysiert, so dass in Gegenwart der Epoxydverbindungen (a) eine homogene Umsetzung mit den SH-Gruppen der Polythiole nicht möglich ist.

Die Polymere können zusätzlich feste oder flüssige Additive enthalten, wie z.B. einen Schaumstabilisator, etwa ein Silikon-Tensid wie Polydimethylsiloxan-Polyether Copolymere.

Die Polyepoxid-Verbindungen (a) sind vorzugsweise Glycidester organischer Di- oder Polycarbonsäuren mit aromatischen und/der cycloaromatischen Gruppen, wie z. B. Cyclohexan-1,4-dicarbonsäure-diglycidester, Cyclohexan-1,3-dicarbonsäure-diglycidester, Cyclohexan-1,2-dicarbonsäure-diglycidester, Phthalsäure-diglycidester, Isophthalsäure-diglycidester, Terephthalsäure-diglycidester, Norbornendicarbonsäure-diglycidester, 3,4-Epoxycyclohexylmethyl-3,4-epoxycyclohexanecarboxylat, Bis((3,4-epoxycyclohexyl)-methyl)adipat, 4,5-Epoxytetrahydrophthalsäure-diglycidylester und 4,4'-Methylenebis(N,N-diglycidylaniline).

Weiterhin kommen in Frage aromatische Diglycidether, Cyclohexan-1,4-dimethanol-diglycidether, Cyclohexan-1,2-dimethanol-diglycidether, Bisphenol-A-diglycidether, Bisphenol-F-diglycidether, Bisphenol-S-diglycidether, N,N-Diglycidyl-4-glycidyloxyanilin, 4,4'-Methylen-bis(N,N-diglycidylanilin), 1,4-Cyclohexandimethanol-bis(3,4-epoxycyclohexanecarboxylate) usw., epoxidierte Cycloolefine, wie Vinylcyclohexen-dioxid, Dicyclopentadien-dioxid.

Nach einer bevorzugten Ausgestaltung der Erfindung weisen die eingesetzten aromatischen Diglycidylether einen Restgehalt vom kleiner 10 ppm an freien, unreagierten Bisphenolen auf.

Eine bevorzugte Klasse der Polyepoxid-Verbindungen sind oligomerer oder polymerer Natur. Hier seien insbesondere genannt Epoxidharze auf Basis von Bisphenol A und F oder Novolaken. Die Umsetzung von Phenolen mit Formaldehyd (unter Katalyse) führt zu Novolaken. Das anschließende Anfügen von Epoxidgruppen mit Epichlorhydrin erzeugt Novolake mit Glycidyl-Resten, wie Epoxyphenol-Novolak (EPN) oder Epoxycresol-Novolak (ECN). Bevorzugt sind oligmere Strukturen mit 2 bis 4 Phenol- bzw. 2 bis 4 Bisphenol-Einheiten bzw. Phenylen-Einheiten wie Toluoldiamin oder N-Methyldiphenyldiamin.

Weiterhin können erfindungsgemäß eingesetzt werden epoxidierte Terpene

Die aliphatischen Epoxid-Verbindungen (b) sind insbesondere epoxidierte ungesättigten Fettsäureester oder epoxidierte mehrfach ungesättigte Fettalkohole (jeweils mit mindestens 14 Kohlenstoffatomen). Ebenso geeignet sind epoxidierte natürliche Öle wie epoxidiertes Leinöl, epoxidiertes Sojaöl, epoxidiertes Rapsöl, epoxidiertes Cashew-Nuss-Öl, epoxidiertes Erdnussöl, epoxidiertes Rübsamenöl etc. Weiterhin können erfindungsgemäß eingesetzt werden Öle aus Zitrusfrüchten oder Pentaerythritol-tetraglycidyl-ether. Auch die aliphatischen Epoxid-Verbindungen (b) weisen vorzugsweise im Mittel größer 1,7 oder besser im Mittel zwei und mehr Epoxid-Gruppen auf.

Beispiele für geeignete Polyepoxid-Verbindungen (a) und aliphatischen Epoxid-Verbindungen (b) sind in Tabelle 1 aufgeführt.

Der erfindungsgemäße Vorteil der Mischung von zwei unterschiedlichen Epoxydkomponenten - einer Standard-Epoxydverbindung mit mittlerer bis hoher Reaktivität aber auch hoher Viskosität - und einem oder mehreren natürlichen epoxidierten Ölen bzw. polyfunktionellen Glycidethern liegt u.a. in der Herstellung von Gemischen, die durch die unterschiedliche Reaktivität der Epoxydgruppen der beiden Komponenten in Gegenwart der erfindungsgemäßen Katalysatorkombinationen stufenweise reagieren können und so die Reaktionswärme der Thiol-Epoxyd-Reaktion in der Kürze der verfügbaren Zeit vollständig zur Schaumbildung und/oder Härtung ausnutzen können.

Die Polythiol-Verbindungen (c) sind organisch-chemische Verbindungen, die zwei oder mehrere aliphatisch oder aromatisch gebundene Mercaptan-Gruppen (-SH) als funktionelle Gruppen tragen. Als Thiol-Verbindungen sind besonders geeignet Verbindungen mit zwei bis zehn endständigen Mercaptangruppen, wobei die Thiolgruppen über aliphatische Methylen-, Ethylen- oder längere Ketten an die zweite oder mehrere Thiolgruppen gebunden sein können oder zwischen den Thiolgruppen zusätzlich Ester-, Ether-, Urethan-, Amid- oder Harnstoffgruppen eingebaut sein können. Solche Polythiol-Verbindungen sind gut bekannt, z. B. die höheren Bismercaptane mit 12 bis 24 $CH_2$-Gruppen zwischen den Thiolgruppen oder an Cycloaliphaten oder Bicycloaliphaten oder Cycloaliphat-aliphat-cycloalophat gebundene Thiolgruppen.

Besonders geeignete Polythiol-Verbindungen sind Pentaerytrittetrathiol, Trimethyolporpanthiol, Pentaerythritoltetra(3-mercaptopropionat), Trimethylolpropantri(3-mercaptopropionat), Pentaerythritoltetrathioglycolat und/oder Trimethylolpropantrithioglycolat. Bei der Herstellung der Polythiol-Verbindung unter Verwendung der analogen Polyhydroxyverbindungen, z.B. durch Umsetzung mit Mercaptopropionsäure, müssen nicht notwendigerweise alle OH-Gruppen zu SH-Gruppen umgesetzt werden. Polythiol-Verbindung enthaltend zu einem geringeren Anteil OH-Gruppen sind daher auch eingeschlossen in der Bezeichung Polythiol-Verbindung.

Weiterhin können Polyether mit endständigen SH-Gruppen der Molmasse 250 bis 3000 eingesetzt werden, wie Polyether mit endständigen SH-Gruppen auf PEG oder PPG oder Poly-THF Basis. Besonders geeignet sind Polythiolester, die sich von Polyolen mit 2 bis 12 OH-Gruppen ableiten, die mit Thioglykolsäure, Thioprorionsäure, Mercaptoessigsäure, Thiomilchsäure usw. verestert wurden.

Solche Verbindungen sind z. B. Diethylenglykol-bis-(thiopropionsäureester), Trimethylolpropan-tris(thiopropionsäureester), Glycerin-tris(thio-propionsäureester), Pentaerythrit-tetrakis(thiopropionsäureester), Xylitol-penta(thiopropion-säureester), Sorbitol-hexa(thiopropionsäureester), Diglycerin-tetrakis(thiopropionsäureester), Dipentaerythrit-hexa(thiopropionsäureester), Sucrose-octa(thiopropionsäureester), 1,3,5-Tris(3-mercaptopropylcarboxy-ethyl)-cyanursäure usw..

Als Base (d) kommen in erster Linie die an sich bekannten basischen Katalysatoren in Frage, insbesondere Tetrabutyl-ammonium-fluorid, Tetraphenylphosphoniumborat, 1,8-Diazabicyclo-undecen (DBU), Triazabicyclodecen (TBD), N-Methyltriazabicyclodecen (MTBD), Hexamethylbiguanid, Tetramethylguanidin (TMG), Dimethylpiperazin, Tetramethylendiamin, andere tertiäre Amine wie Diazabicyclooctan (DABCO), Bis-(N,N-dimethylaminoethyl)ether, Triethylamin, Hydroxypropyl-Imidazol, N-Methylimidazol, 2-Methylimidazol, 1,2-Dimethylimidazol und/oder Bisimidazol, wobei die tertiären Amine erfindungsgemäß in Kombination mit weiteren primären/sekundären Aminen sowie anorganischen basischen Verbindungen eingesetzt werden. Andere basische Standardkatalysatoren können ebenfalls eingesetzt werden. Insbesondere wird zusätzlich Lithiumhydroxid, Natriumhydroxid, Kaliumhydroxid und/oder Wasser eingesetzt.

Weiterhin werden erfindungsgemäß basische Verbindungen als Umsetzungsprodukte der Alkalimetallhydroxide mit organischen Mercaptocarbonsäuren eingesetzt. Die organischen Mercaptocarbonsäuren können als Minderbestandteil der Polythiolverbindungen, u.a. auch herstellungsbedingt, in diesen vorhanden sein und können in situ durch die Umsetzung mit Lithium-, Natrium- und/oder Kaliumhydroxid gebildet werden, so dass z. B. Kaliummercaptopropionat oder Natriummercaptobutyrat oder Lithiummercaptooctoat gebildet werden.

Alternativ können neben der in situ Bildung von Alkalimetallcarboxylaten durch die Reaktion von Alkalimetallhydroxiden oder -carbonaten mit im Gemisch befindlichen Mercaptocarbonsäuren auch vorgebildete Alkalimetallcarboxylate eingesetzt werden, z. B. Lithiumformiat, Natriumformiat, Kaliumformiat, Lithiumacetat, Natriumacetat, Kaliumacetat, Lithiumpropionat, Natriumpropionat, Kaliumpropionat, Lithiumbutyrat, Natriumbutyrat, Kaliumbutyrat, aber auch Alkalicarboxylate auf der Basis langkettiger Carbonsäuren, z. B. Lithiumoleat, Natriumoleat, Kaliumoleat, Lithiumdodecylat, Natriumdodecylat, Kaliumdodecylat, oder von Gemischen von Säuren, die durch Spaltung von natürlichen Ölen erhalten werden, z. B. Lithiumtallowat, Natriumtallowat, Kaliumtallowat etc.

Insbesondere bei Verwendung von Imidazol-Verbindungen und Guanidinen als Base wurde beobachtet, dass bereits sehr geringe Mengen an Katalysator, z.B. im Bereich von 0,05 bis 0,1 Teilen zur Katalyse für Schaumsysteme ausreichen, wenn ebenfalls 0,5 bis 2,5 Teile Monocarbonat oder Biscarbonat, z. B. Diglycerinbiscarbonat, eingesetzt werden. Die organischen Carbonate wirken dabei als Cokatalysatoren durch die Ausbildung von betainähnlichen Strukturen unter Abspaltung des Kohlendioxids, das dann als Treibmittel zur Verfügung steht. Diese Reaktion ist beispielhaft

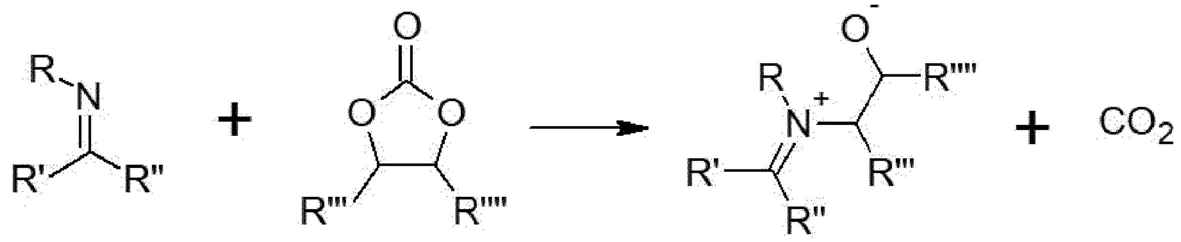

Die auf diese Weise gebildeten betainähnlichen Strukturen sind bei Reaktionen der Epoxyde mit den SH-Gruppen der Polythiole hochwirksame Katalysatoren.

Die Carbonat-Verbindungen (e1) können näher als Monocarbonate, als Dicarbonate oder auch als Polycarbonate definiert werden.

Als Monocarbonate kommen erfindungsgemäß in Frage Ethylencarbonat, Propylencarbonat, Butylencarbonat und höhere aliphatische oder cycloaliphatische oder araliphatische Carbonate. Als Dicarbonate werden erfindungsgemäß eingesetzt Diglycerindicarbonat, Diglycerintricarbonat, Trimethylolpropantricarbonat, Biscarbonate von Polyetheralkoholen der Molmasse 200 bis 3000, Biscarbonate von Polyesteralkoholen der Molmasse 300 bis 2300, Polycarbonatdiole, wie z.B. Converge® Polyol 212-10 von Novomer oder Eternacoll® PH100 von UBE, Biscarbonate von Polycarbonatdiolen, Carbonsäure-bis-(2-oxo-[1,3]dioxolan-4-ylmethyl)ester, Bernsteinsäure-bis-(2-oxo-[1,3]dioxolan-4-ylmethyl)ester, Terephthalsäure-bis-(2-oxo-[1,3]dioxolan-4-ylmethyl) ester etc. Weiterhin können Tricarbonate eingesetzt werden, z. B. Pentaerythrit-triscarbonat.

Bevorzugt sind einfache Monocarbonate wie Propylencarbonat, Glycerincarbonat, Ethylencarbonat sowie Biscarbonate von Polyesteralkoholen (freie OH-Gruppen umgesetzt mit dem Carbonat) der Molmasse 300 bis 2300 g/mol und Biscarbonate von Polycarbonatdiolen.

Durch Verwendung von bestimmten Biscarbonaten, z. B. Diglycerinbicarbonat, kann durch eine schnelle Umsetzung eine vergleichsweise hohe Temperatur erreicht werden und durch den Zusatz von Stabilisatoren und Doppelmetallkatalysatoren (DMC-Katalysatoren), z. B. aus Eisen und Cobalt oder Zink und Cobalt oder Nickel und Eisen, eine Spaltung der Carbonate in Epoxid und Kohlendioxid erfolgen, wobei das *in situ* gebildete Epoxid sehr reaktionsfähig ist und mit der Mercaptan-Gruppe der Thio-Verbindung sehr schnell reagiert, so dass durch das freigesetzte Kohlendioxid ein zelliges oder geschäumtes Produkt wie ein Schaumstoff hergestellt wird.

Für die zelligen oder geschäumten Produkte werden bevorzugt Carbonat-Verbindungen eingesetzt, die eine geeignete thermische Zersetzungstemperatur aufweisen. Diese mit $T_D$ bezeichnete Temperatur ist bekannt und liegt bei den Carbonaten in Abhängigkeit von deren Struktur unkatalysiert zwischen 120 und 240°C, bei Verwendung von Katalysatoren wie Aluminiumoxid-Alkalifluorid jedoch zwischen 70 und 150°C und damit im Bereich der Temperatur, die während der Umsetzung auftreten. In Gegenwart der erfindungsgemäßen Alkali-Verbindungen und/oder der betainähnlichen, in situ hergestellten Katalysatoren kann die Temperatur der Spaltung der Carbonate weiter bis auf z.B. 35°C gesenkt werden.

Im Falle kompakter Materialien wie Elastomere, Beschichtungen oder Vergussmassen werden vorzugsweise z. B. Monocarbonat-Verbindungen mit höherer thermischer Stabilität verwendet, um die Spaltung in Epoxid und Kohlendioxid gering zu halten z. B. Ethylencarbonat oder Propylencarbonat.

Als Additive werden z.B. Metalloxide, z. B. Titandioxid, Aluminiumoxid, Magnesiumoxid, Eisenoxide, Indiumzinkoxid, Zinkoxid, Aluminiumoxidhydroxid, Schichtsilikate, Laponit, Doppelmetalloxide oder -hydroxide, aber auch organische nanoskalige Partikel oder Dispersionen, die diese enthalten, in Frage, insbesondere Oligoharnstoffe hergestellt nach dem in der WO 2012/095517 offenbarten Verfahren.

Als "Blowing Agents" bzw. "Co-Blowing Agens" (physikalisches Treibmittel e2) zusammen mit der Carbonat-Verbindung werden Flüssigkeiten eingesetzt die bei -10 bis 80°C, insbesondere 20 bis 60°C oder sogar 25 bis 40°C in den Gaszustand übergehen. Geeignet ist z. B. $CO_2$, fluorierte oder perfluorierte Kohlenwasserstoffe mit jeweils 1 bis 5 Kohlenstoffatomen (wie 1,1,1 ,3,3-Pentafluorbutan, 1,1,1,2,3,3,3-Heptafluorbutan) und/oder fluorierte und chlorierte Kohlenwasserstoffe (wie HCFC-142b), trans-Dichlorethen, Propan, Butane, Pentane, Dichlormethan, Dimethoxymethan, Dimethylether und/oder expandierbare Polymerkügelchen (enthaltend z.B. physikalische Treibmittel wie Butan).

Es gibt hierbei verschiedene Möglichkeiten, das Treibmittel $CO_2$ einzuspeisen. Zum einen als Einspeisung in eine Komponente der Reaktion unmittelbar vor dem Mischkopf (Online-Prozess) und durch $CO_2$-Beladung einer Reaktionskomponente im Tagesbehälter (Batch-Prozess). Hierbei können Nukleierungstechniken eingesetzt werden.

Zur Herstellung von Materialien wie Elastomere, Beschichtungen oder Vergussmassen werden in der Regel drei oder zwei Komponenten verwendet, von denen bei einem zwei Komponenten-System die eine Komponente die A-Komponente und die andere Komponente die B-Komponente ist. Eine A-Komponente enthält dann zumindest:

(a) der Polyepoxid-Verbindung,
(b) der aliphatischen Epoxid-Verbindung,

in Gegenwart von
(d) 0,001 bis 5 Gew.-Teilen des basischen Katalysators und
und einer B-Komponente enthaltend zumindest:
(c) der Polythiol-Verbindung in einer Menge so, dass sich eine Kennzahl von 50 bis 120, insbesondere 70 bis 100, ergibt.
die durch Vermischen zur Reaktion gebracht und an Ort und Stelle innerhalb von 3 Sekunden bis 24 Stunden bei Temperaturen von 5°C bis 45°C umgesetzt werden, insbesondere bei Raumtemperatur.

Alternativ ist es möglich, Gemische aus einer A-Komponente enthaltend zumindest

(a) die Polyepoxid-Verbindung,
(b) die aliphatische Epoxid-Verbindung,
(c) die Polythiol-Verbindung, vorzugsweise in einer Menge so, dass sich eine Kennzahl von 50 bis 120, insbesondere 70 bis 100, ergibt,

vorzulegen bzw. vorzughalten und folgende Bestandteile erst unmittelbar vor der Umsetzung zuzugeben (B-Komponente):
(d) die Base(n) als Katalysator, insbesondere 0,001 bis 5 Gew.-Teile des basischen Katalysators

Die Treibmittel

(e1) die Carbonat-Verbindung, insbesondere 0,2 bis 35 Gew.-Teile, vorzugsweise 1 bis 10 Gew.-Teile der Carbonat-Verbindung und/oder
(e2) das physikalische Treibmittel, wobei als physikalisches Treibmittel Substanzen eingesetzt werden, die bei -10 bis 80°C von dem flüssigen oder gelösten Zustand in den gasförmigen Zustand übergehen,

können Bestandteil der Komponente A oder B sein.

Das Gemisch aus (a), (b) und (c) bleibt i. d. R. für mehrere Tage oder sogar Wochen verarbeitbar und es wird erst unmittelbar vor der Formgebung die Base (d) in Form eines Katalysators oder eines Katalysatorgemisches zuzugeben, so dass die Topfzeit wieder im Bereich von 3 s bis 2 Stunden ist.

Die Verarbeitung der erfindungsgemäßen Gemische kann manuell durch einfaches Vermischen erfolgen, durch die Verwendung von Mischmaschinen mit geeigneten Mischköpfen oder durch Extruder.

Die zur Herstellung der Thio-Epoxidharze eingesetzten Edukte können sowohl auf Nieder-, Mittel- oder Hochdruckanlagen verarbeitet bzw. dosiert und in statischen und dynamischen Mischköpfen als auch durch Kollisionsmischung (Gegenstrom) gemischt und appliziert werden. Zur Verwendung kommen sowohl luftgespülte, flüssiggespülte (Lösemittel oder eine der Hauptkomponenten) oder mechanisch selbstreinigende Mischköpfe. Hierbei können zwei oder mehr Komponenten direkt gemischt werden, alternativ ist auch eine Vordosierung von zwei oder mehr Komponenten in der Zuführung einer der Hauptkomponenten sowohl auf der Niederdruckzuführung als auch der Mittel- oder Hochdruckseite möglich. Dieses ist ebenfalls für die Zudosierung von Treibmitteln möglich, welche jedoch auch - je nach Reaktionszeit - nach der Mischung der Hauptkomponenten zudosiert werden können, bspw. für Injektionssysteme oder

Anwendungen mit wechselnden Dichteverhältnissen im Produkt (wie Dämpfungselemente). Die Verarbeitung kann bei Raumtemperatur oder gemeinsam bzw. getrennt temperiert erfolgen. Je nach Viskosität ist eine getrennte Temperatursteuerung vorzuziehen.

Die erfindungsgemäß hergestellten Produkte werden als Elastomere, Vergussmassen, Beschichtungen, zellige Elastomere, Schaumstoffe oder Dichtmassen eingesetzt und zeichnen sich durch hohe mechanische Eigenschaftswerte, gute Hydrolysebeständigkeit, gute Kohlenwasserstoff-Beständigkeit und gute UV-Beständigkeit aus. Bei Einsatz der nanoskaligen Oligoharnstoffe wird zusätzlich eine bakterizide Wirkung erzielt oder die Beschichtung unter Verwendung dieser speziellen Nanopartikel weist Antifouling-Eigenschaften auf.

## Beispiele

Beispiel 1

Folgende Produkte wurden eingesetzt:

Für die 1. Komponente (Epoxidkomponenten)

| | |
|---|---|
| - PC® ER 245, Bisphenol-A/Bisphenol-F-Gemisch | 1100 g |
| - Epoxidiertes Leinöl, ELO | 500 g |

Für die 2. Komponente (Thiole, Additive und Treibmittel)

| | |
|---|---|
| - PC TOL® M-490, Pentaerythritoltetrakis(3-mercaptopropionat) | 800 g |
| - PC STAB® 8805, polyethermodifiziertes Polydimethylsiloxan | 25 g |
| - PC® Medion, Propylencarbonat | 60 g |
| - Solvokane®, 1,1,1,3,3-Pentafluorbutan (93 %), *trans*-1,2-Dichlorethen (7 %) | 500 g |

Für die 3. Komponente (Katalysatormischung)

| | |
|---|---|
| - PC CAT® TMG, Tetramethylguanidin | 25 g |
| - 6 N Natronlauge | 60 g |

Die Komponenten wurden in der Reihenfolge 1-2-3 gemischt und bis max. eine Minute bei RT mit 3000 $Umin^{-1}$ bei RT gerührt und dann unmittelbar in eine eine PE-Form mit 50 l Inhalt überführt. Die Reaktion sprang schon während der Überführung an und die Steigzeit war nach etwa 3,5 Minuten beendet. Das erzielte Raumgewicht betrug 32 $kg/m^3$.

Beispiel 2

Folgende Produkte wurden eingesetzt:

Für die A- Komponente (Epoxidkomponenten und Thiole)

| | |
|---|---|
| - PC® ER 245, Bisphenol-A/Bisphenol-F-Gemisch | 5400 g |
| - Epoxidiertes Sojaöl, ESBO | 2500 g |
| - PC TOL® M-490, Pentaerythritoltetrakis(3-mercaptopropionat) | 4000 g |

Für die B- Komponente (Katalysatormischung, Additive und Treibmittel)

| | |
|---|---|
| - PC STAB® 8805, polyethermodifiziertes Polydimethylsiloxan | 125 g |
| - Eternacoll® PH100, aliphatisches Polycarbonatdiol, mit darin gelöstem $CO_2$ angereichert | 1300 g |
| - Solvokane® 365, 1,1,1 ,3,3-Pentafluorbutan | 2200 g |
| - PC CAT® TMG, Tetramethylguanidin | 125 g |
| - Wasser | 250 g |

Die Komponenten wurden als 2K-System mit der Hochdruckmaschine Nitroil® PU A-100 verarbeitet. Die Reaktion sprang kurz nach dem Aufeinandertreffen der Komponenten in der Mischkammer an und die Steigzeit war nach etwa 3,5 Minuten beendet. Das erzielte Raumgewicht betrug 23 $kg/m^3$.

Beispiel 3

Folgende Produkte wurden eingesetzt:

Für die 1. Komponente (Epoxidkomponenten)

| | |
|---|---|
| - PC® ER 245, Bisphenol-A/Bisphenol-F-Gemisch | 800 g |
| - Epoxidiertes Leinöl, ELO | 750 g |

Für die 2. Komponente (Thiole, Additive und Treibmittel)

| | |
|---|---|
| - PC TOL® M-490, Pentaerythritoltetrakis(3-mercaptopropionat) | 800 g |
| - PC STAB® 8805, polyethermodifiziertes Polydimethylsiloxan | 25 g |
| - Solvokane®, 1,1,1,3,3-Pentafluorbutan (93 %), *trans*-1,2-Dichlorethen (7 %) | 500 g |

Für die 3. Komponente (Katalysatormischung)

| | |
|---|---|
| - PC CAT® TMG, Tetramethylguanidin | 25 g |

Die Komponenten wurden in der Reihenfolge 1-2-3 gemischt und bis max. eine Minute bei RT mit 3000 $Umin^{-1}$ bei RT gerührt und dann unmittelbar in einen PE-Sack mit 50 l Inhalt überführt. Die Reaktion springt schon während der Überführung an und die Steigzeit ist nach etwa 3,5 Minuten beendet. Das erzielte Raumgewicht betrug 39 $kg/m^3$. Der erhaltene Schaum wirkte versprödet.

Beispiel 4

Folgende Produkte wurden eingesetzt:

Für die 1. Komponente (Epoxidkomponenten)

| | |
|---|---|
| - PC® ER 245, Bisphenol-A/Bisphenol-F-Gemisch | 1100 g |
| - Epoxidiertes Leinöl, ELO | 400 g |

Für die 2. Komponente (Thiole, Additive und Treibmittel)

| | |
|---|---|
| - PC TOL® M-490, Pentaerythritoltetrakis(3-mercaptopropionat) | 750 g |
| - PC STAB® 8805, polyethermodifiziertes Polydimethylsiloxan | 25 g |
| - Converge® Polyol 212-10, aliphatisches Polycarbonatdiol | 70 g |
| - Solvokane®, 1,1,1,3,3-Pentafluorbutan (93 %), *trans*-1,2-Dichlorethen (7 %) | 450 g |

Für die 3. Komponente (Katalysatormischung)

| | |
|---|---|
| - PC CAT® DBU, Diazabicyclo-undecen | 25 g |
| - 6 N Kalilauge | 45 g |

Die Komponenten wurden in der Reihenfolge 1-2-3 gemischt und bis max. eine Minute bei RT mit 3000 Umdr/min bei RT gerührt und dann unmittelbar in eine PE-Form mit 50 l Inhalt überführt. Die Reaktion sprang schon während der Überführung an und die Steigzeit war nach etwa 3 Minuten beendet. Das erzielte Raumgewicht betrug 38 $kg/m^3$.

<u>Beispiel 5</u>

Folgende Produkte wurden eingesetzt:

Für die 1. Komponente (Epoxidkomponenten)

| | |
|---|---|
| - PC® ER 245, Bisphenol-A/Bisphenol-F-Gemisch | 1200 g |
| - Epoxidiertes Sojaöl, ESBO | 400 g |

Für die 2. Komponente Thiole Additive und Treibmittel

| | |
|---|---|
| - PC TOL® M-490, Pentaerythritoltetrakis(3-mercaptopropionat) | 750 g |
| - PC STAB® 8805, polyethermodifiziertes Polydimethylsiloxan | 25 g |
| - DMM, Dimethoxymethan | 250 g |

Für die 3. Komponente (Katalysatormischung)

| | |
|---|---|
| - PC CAT® TMG, Tetramethylguanidin | 25 g |

Die Komponenten wurden in der Reihenfolge 1-2-3 gemischt und bis max. eine Minute bei RT mit 3000 $Umin^{-1}$ bei RT gerührt und dann unmittelbar in eine PE-Form mit 50 l Inhalt überführt. Die Reaktion sprang schon während der Überführung an und die Steigzeit war nach etwa 3,5 Minuten beendet. Das erzielte Raumgewicht betrug 32 $kg/m^3$.

<u>Beispiel 6</u>

Folgende Produkte wurden eingesetzt:

Für die 1. Komponente (Epoxidkomponenten)

| | |
|---|---|
| - PC® ER 245, Bisphenol-A/Bisphenol-F-Gemisch | 1100 g |
| - Epoxidiertes Leinöl, ELO | 500 g |

Für die 2. Komponente (Thiole, Additive und Treibmittel)

| | |
|---|---|
| - PC TOL® M-490, Pentaerythritoltetrakis(3-mercaptopropionat) | 800 g |
| - PC STAB® 8805, polyethermodifiziertes Polydimethylsiloxan | 25 g |
| - Solvokane®, 1,1,1,3,3-Pentafluorbutan (93 %), *trans*-1,2-Dichlorethen (7 %) | 500 g |

Für die 3. Komponente (Katalysatormischung)

| | |
|---|---|
| - PC CAT® DBU, Diazabicyclo-undecen | 25 g |
| - PC CAT TKO, Kaliumoctoatlösung | 75 g |
| - Wasser | 50 g |

Die Komponenten wurden in der Reihenfolge 1-2-3 gemischt und bis max. eine Minute bei RT mit 3000 $Umin^{-1}$ bei RT gerührt und dann unmittelbar in eine PE-Form mit 50 l Inhalt überführt. Die Reaktion sprang schon während der Überführung an und die Steigzeit war nach etwa 2,5 Minuten beendet. Das erzielte Raumgewicht betrug 31 $kg/m^3$.

Beispiel 7

Folgende Produkte wurden eingesetzt:

Für die 1. Komponente (Epoxidkomponenten)

| | |
|---|---|
| - Cyclohexan-1,2-diglycidester | 500 g |
| - ipox CL16, Pentaerythrit-glycidether | 320 g |
| - Epoxidiertes Leinöl, ELO | 255 g |

Für die 2. Komponente (Thiole, Additive und Treibmittel)

| | |
|---|---|
| - PC TOL® M-490, Pentaerythritoltetrakis(3-mercaptopropionat) | 850 g |
| - PC STAB® 07, polyethermodifiziertes Polydimethylsiloxan | 22 g |
| - PC® Medion, Propylencarbonat, mit darin gelöstem $CO_2$ angereichert | 175 g |

Für die 3. Komponente (Katalysatormischung)

| | |
|---|---|
| - Tetrabutyl-ammonium-fluorid | 11 g |
| - PC CAT® DBU, 1,8-Diazabicycloundecen | 10 g |

(fortgesetzt)

- PC CAT® TKA, Kaliumacetat (gelöst in Ethylenglykol) 19 g

Die Komponenten wurden in der Reihenfolge 1-2-3 gemischt und bis max. eine Minute bei RT mit 3000 $Umin^{-1}$ bei RT gerührt und dann unmittelbar in eine längliche PP-Profilform überführt. Die Steigzeit war nach etwa 4 Minuten beendet. Das erzielte Raumgewicht der Profildichtung betrug 450 $kg/m^3$.

PC®, PC TOL®, PC STAB®, PC CAT® sind Marken der Performance Chemicals Handels GmbH.

*Tabelle 1*

| | | |
|---|---|---|
| N,N-Diglycidyl-4-glycidyloxyanilin | **5026-74-4** | 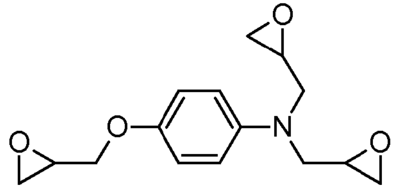 |
| 4,4'-Methylen-bis-(N,N-diglycidylanilin) | **28768-32-3** | 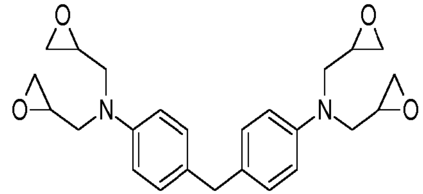 |
| Pentaerythritoltetraglycidylether | **3126-63-4** | 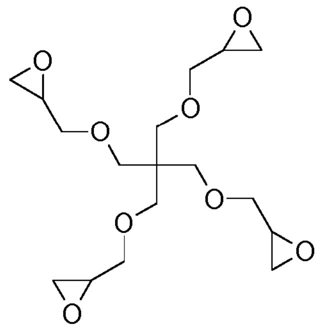 |
| 3-Ethyl-3[[(3-ethyloxetan-3 -yl)-methoxy]methyl]oxetan (DOX) | **18934-00-4** | 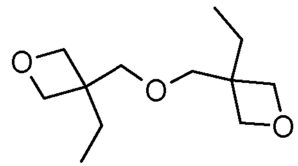 |
| 3,4-Epoxycyclohexancarbonsäuremethylester | **41088-52-2** | 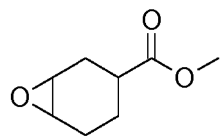 |

(fortgesetzt)

| | | | |
|---|---|---|---|
| | 1,4-Cyclohexandimethanol-bis(3,4-epoxycyclohexancarboxylat) (Syna Epoxy 60 (ERLX4360)) | **20249-12-1** | 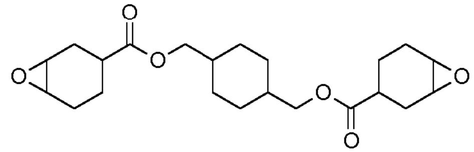 |
| | Vinylcyclohexandioxid | **106-87-6** | 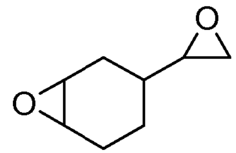 |
| | Dicyclopentadiendioxid | **81-21-0** | 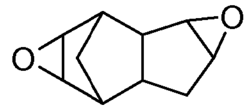 |
| | 1,4-Butanedioldiglycidylether | **2425-79-8** | 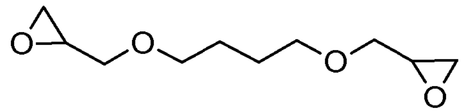 |
| Syna Epoxy 21 (UVR6110, ERL4221) | 3,4-Epoxycyclohexylmethyl-3,4-epoxycyclohexancarboxylat | **2386-87-0** | 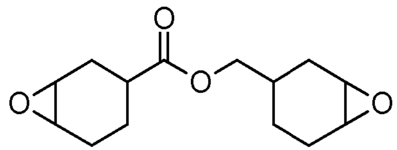 |
| Syna Epoxy 06 (UVR6105, ERL4221D) | 3,4-Epoxycyclohexylmethyl-3,4-epoxycyclohexancarboxylat | **2386-87-0** | 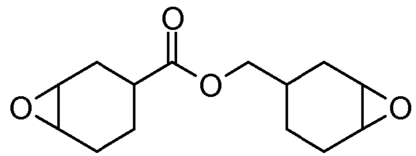 |
| Syna Epoxy 07 (UVR6107, ERL4221E) | 3,4-Epoxycyclohexylmethyl-3,4-epoxy-cyclohexancarboxylat | **2386-87-0** | 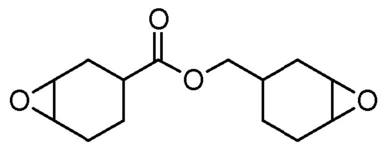 |

(fortgesetzt)

| | | | |
|---|---|---|---|
| Syna Epoxy 28 (UVR6128, ERL4299) | Bis(3,4-epoxycyclohexylmethyl)adipat | **3130-19-6** | 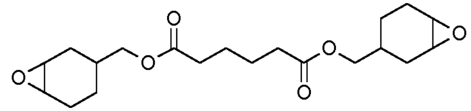 |
| Hexahydrophthalsäurediglycidylester | Diglycidyl-1,2-cyclohexandicarboxylat | **5493-45-8** | 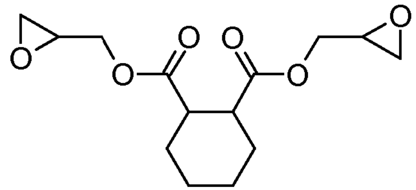 |
| | Tetrahydrophthalsäurediglycidylester | **21544-03-6** | 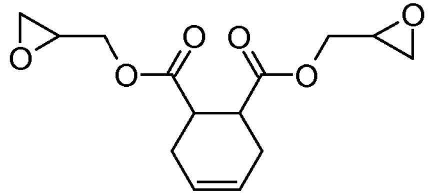 |
| | 4,5-Epoxytetrahydrophthalsäurediglycidylester | **25293-64-5** | 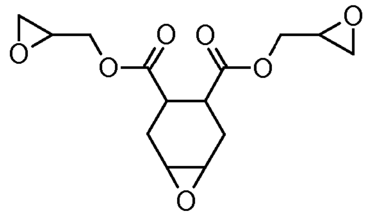 |
| VCMX | 4-Vinyl-1-cyclohexan-1,2-epoxid | **106-86-5** | 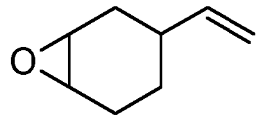 |
| S-101; Syna O-XA(OXT-101) | 3- Ethyl-3-oxetanmethanol | **3047-32-3** | 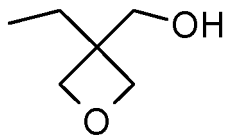 |
| AOE C-16 | 1,2-Epoxyhexadecan | **7320-37-8** | 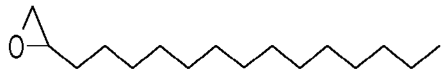 |

**Patentansprüche**

1. Thio-Epoxidharz erhältlich aus der Umsetzung von mindestens

    (a) einer Polyepoxid-Verbindung mit mindestens zwei Epoxid-Gruppen pro Molekül aufweisend aromatische und/oder cycloaliphatische Gruppen,
    (b) einer aliphatischen Epoxid-Verbindung mit mindestens 14 Kohlenstoffatomen aufweisend mindestens eine Epoxid-Gruppe, und
    (c) mindestens einer Polythiol-Verbindung mit mindestens zwei Mercaptan-Gruppen
    in Gegenwart
    (d) mindestens einer Base als Katalysator und
    (e) mindestens einer Carbonat-Verbindung (e1) oder eines physikalischen Treibmittels (e2) oder beidem, wobei als physikalisches Treibmittel Substanzen eingesetzt werden, die bei -10 bis 80°C von dem flüssigen oder gelösten Zustand in den gasförmigen Zustand übergehen,

    wobei ein zelliges oder geschäumtes Thio-Epoxidharz erhalten wird.

2. Thio-Epoxidharz nach Anspruch 1, wobei mindestens das physikalische Treibmittel (e2) eingesetzt wird oder mindestens die Carbonat-Verbindung (e1) und das physikalische Treibmittel (e2) eingesetzt werden.

3. Thio-Epoxidharz nach Anspruch 1, wobei umgesetzt werden

    (a) 10 bis 65 Gew.-Teile der Polyepoxid-Verbindung,
    (b) 5 bis 70 Gew.-Teile der aliphatischen Epoxid-Verbindung,
    (c) die Polythiol-Verbindung in einer Menge, so dass sich eine Kennzahl von 50 bis 120, insbesondere 70 bis 100, ergibt,
    in Gegenwart von
    (d) 0,001 bis 5 Gew.-Teilen des basischen Katalysators oder Katalysatorgemisches und

        (e1) 0,2 bis 35 Gew.-Teilen, vorzugsweise 5 bis 20 Gew-Teilen, der Carbonat-Verbindung und/ oder
        (e2) des physikalischen Treibmittels.

4. Thio-Epoxidharz nach zumindest einem der vorherigen Ansprüche, wobei die aliphatische Epoxid-Verbindung (b) ein epoxidiertes natürliches Öl ist, insbesondere epoxidiertes Leinöl, epoxidiertes Sojaöl, epoxidiertes Rapsöl, epoxidiertes Tallöl, oder epoxidiertes Erdnussöl.

5. Thio-Epoxidharz nach zumindest einem der vorhergehenden Ansprüche, wobei als Carbonat-Verbindung zumindest ein Monocarbonat eingesetzt wird, insbesondere Ethylencarbonat, Propylencarbonat und/oder Glycerincarbonat.

6. Thio-Epoxidharz nach zumindest einem der vorhergehenden Ansprüche, wobei als Carbonat-Verbindung zumindest ein Polycarbonat eingesetzt wird, insbesondere Polycarbonatdiole, Diglycerinbiscarbonat, Digylcerintricarbonat oder Dipentaerythritbiscarbonat.

7. Thio-Epoxidharz nach zumindest einem der vorhergehenden Ansprüche, wobei als zumindest eine Base Amine eingesetzt werden, insbesondere ausgewählt aus einem oder mehreren Mitgliedern der Gruppe:

    Tetrabutyl-ammonium-fluorid, 1,8-Diazabicyclo-undecen (DBU), Tetramethylguanidin (TMG), Hexamethylbiguanid, Diazabicycloalkene, Diazabicycloctan (DABCO), Guanidin- und Imidazol-Verbindungen,
    insbesondere Amin-Gemische enthaltend zumindest zwei Mitglieder aus der Gruppe Tetramethylguanidin, N-Methylethanolamin, 1,8-Diazabicyclo-undecen und Dimethylaminopropyldipropanolamin.

8. Thio-Epoxidharz nach zumindest einem der vorhergehenden Ansprüche, wobei als zumindest eine Base Alkalimetallsalze eingesetzt werden, insbesondere ausgewählt aus einem oder mehreren Mitgliedern der Gruppen:

    a) Alkalimetallhydroxide,
    b) Alkalimetallsalze von Mercatocarbonsäuren,
    c) Carboxylate von Alkalimetallen, insbesondere Formiate, Acetate, Propionate, Butyrate, Oleate, Tallowate und/oder Dodecanoate,

wobei die Alkalimetalle vorzugsweise Lithium, Natrium und/oder Kalium sind.

**9.** Thio-Epoxidharz nach Anspruch 7 oder 8, wobei zumindest ein Amin und zumindest ein Alkalimetallsalz gemeinsam eingesetzt werden, insbesondere wenn als Treibmittel zumindest eine Carbonat-Verbindung eingesetzt wird.

**10.** Thio-Epoxidharz nach zumindest einem der vorhergehenden Ansprüche, wobei als physikalisches Treibmittel (e2) $CO_2$, insbesondere gelöst, halogenierte Kohlenwasserstoffe mit 1 bis 5 Kohlenstoffatomen oder C3- bis C5-Kohlenwasserstoffe eingesetzt werden.

**11.** Thio-Epoxidharz nach einem der vorhergehenden Ansprüche, wobei als Polythiol-Verbindung Bis-Thiole, Tri-Thiole oder Tetra-Thiole oder Hexa-Thiole eingesetzt werden, vorzugsweise Pentaerytrittetrathiol, Trimethyolpropanthiol, Pentaerythritoltetra(3-mercaptopropionat), Trimethylolpropantri(3-mercaptopropionat), Pentaerythritoltetrathioglycolat und/oder Trimethylolpropantrithioglycolat.

**12.** Thio-Epoxidharz nach einem der vorhergehenden Ansprüche, wobei die Thio-Epoxidharze geschäumte Thio-Epoxidharze mit Raumdichten von 5 bis 100 $kg/m^3$, vorzugsweise 20 bis 60 $kg/m^3$, besonders bevorzugt 10 bis 50 $kg/m^3$ sind.

**13.** Verwendung der Thio-Epoxidharzes nach zumindest einem der Ansprüche 1 bis 11, wobei die zelligen Thio-Epoxidharze Raumdichten von größer 100 bis 600 $kg/m^3$ aufweisen oder Verwendung als Elastomere oder Dichtungen, insbesondere Profildichtungen, mit einer Raumdichte von größer 100 bis 600 $kg/m^3$.

**14.** Verwendung der Thio-Epoxidharzes nach zumindest einem der Ansprüche 1 bis 11 als mikrozellulare Vergussmasse aufweisend eine Raumdichte von größer 600 bis 950 $kg/m^3$.

**15.** Verfahren zur Herstellung von Thio-Epoxidharz durch Umsetzung von mindestens

(a) einer Polyepoxid-Verbindung mit mindestens zwei Epoxid-Gruppen pro Molekül aufweisend aromatische und/oder cycloaliphatische Gruppen,
(b) einer aliphatischen Epoxid-Verbindung mit mindestens 14 Kohlenstoffatomen aufweisend mindestens eine Epoxid-Gruppe, und
(c) mindestens einer Polythiol-Verbindung mit mindestens zwei Mercaptan-Gruppen
in Gegenwart
(d) mindestens einer Base als Katalysator und
(e) mindestens einer Carbonat-Verbindung (e1) oder eines physikalischen Treibmittels (e2) oder beidem, wobei als physikalische Treibmittel Substanzen eingesetzt werden, die bei -10 bis 80°C von dem flüssigen oder gelösten Zustand in den gasförmigen Zustand übergehen ,

wobei ein zelliges oder geschäumtes Thio-Epoxidharz erhalten wird.

**16.** Verfahren nach Anspruch 15 unter Umsetzung zumindest der Komponenten (a) bis (e) bei Temperaturen von 5 bis 150°C, insbesondere 10 bis 45°C.

## Claims

**1.** Thio-epoxy resin obtainable from the reaction of at least

(a) one polyepoxide compound having at least two epoxide groups per molecule comprising aromatic and/or cycloaliphatic groups,
(b) one aliphatic epoxide compound having at least 14 carbon atoms comprising at least one epoxide group, and
(c) at least one polythiol compound having at least two mercaptan groups in the presence of
(d) at least one base as catalyst, and
(e) at least one carbonate compound (e1) or a physical propellant (e2) or both, wherein as physical propellants substances which change from the liquid or dissolved state to the gaseous state at -10 to 80°C are used,

wherein a cellular or foamed thio-epoxy resin is obtained.

**2.** Thio-epoxy resin according to claim 1, wherein at least the physical propellant (e2) is used or at least the carbonate compound (e1) and the physical propellant (e2) are used.

**3.** Thio-epoxy resin according to claim 1, wherein the following react:

(a) 10 to 65 parts by weight of the polyepoxide compound,
(b) 5 to 70 parts by weight of the aliphatic epoxy compound,
(c) the polythiol compound in an amount such that an index of 50 to 120, in particular 70 to 100, is obtained, in the presence of
(d) 0.001 to 5 parts by weight of the basic catalyst or catalyst mixture and

(e1) 0.2 to 35 parts by weight, preferably 5 to 20 parts by weight, of the carbonate compound and/or
(e2) of the physical propellant.

**4.** Thio-epoxy resin according to at least one of the preceding claims, wherein the aliphatic epoxy compound (b) is an epoxidized natural oil, in particular epoxidized linseed oil, epoxidized soybean oil, epoxidized rapeseed oil, epoxidized tall oil, or epoxidized peanut oil.

**5.** Thio-epoxy resin according to at least one of the preceding claims, wherein at least one monocarbonate is used as the carbonate compound, in particular ethylene carbonate, propylene carbonate and/or glycerol carbonate.

**6.** Thio-epoxy resin according to at least one of the preceding claims, wherein at least one polycarbonate is used as the carbonate compound, in particular polycarbonate diols, diglycerol biscarbonate, digylcerol tricarbonate or dipentaerythritol biscarbonate.

**7.** Thio-epoxy resin according to at least one of the preceding claims, wherein amines are used as at least one base, in particular selected from one or more members of the group:
tetrabutylammonium fluoride, 1,8-diazabicyclo-undecene (DBU), tetramethylguanidine (TMG), hexamethylbiguanide, diazabicycloalkenes, diazabicycloctane (DABCO), guanidine compounds and imidazole compounds, in particular amine mixtures containing at least two members from the group of tetramethylguanidine, N-methylethanolamine, 1,8-diazabicyclo-undecene and dimethylaminopropyldipropanolamine.

**8.** Thio-epoxy resin according to at least one of the preceding claims, wherein alkali metal salts are used as at least one base, in particular selected from one or more members of the groups:

a) alkali metal hydroxides,
b) alkali metal salts of mercaptocarboxylic acids,
c) carboxylates of alkali metals, in particular formates, acetates, propionates, butyrates, oleates, tallowates and/or dodecanoates,

wherein the alkali metals are preferably lithium, sodium and/or potassium.

**9.** Thio-epoxy resin according to claim 7 or 8, wherein at least one amine and at least one alkali metal salt are used together, in particular if at least one carbonate compound is used as propellant.

**10.** Thio-epoxy resin according to at least one of the preceding claims, wherein $CO_2$, in particular dissolved $CO_2$, halogenated hydrocarbons having 1 to 5 carbon atoms or C3 to C5 hydrocarbons are used as the physical propellant (e2).

**11.** Thio-epoxy resin according to one of the preceding claims, wherein bis-thiols, tri-thiols or tetra-thiols or hexa-thiols are used as the polythiol compound, preferably pentaerytritoltetrathiol, trimethylolpropanethiol, pentaerythritoltetra(3-mercaptopropionate), trimethylolpropantri(3-mercaptopropionate), pentaerythritoltetrathioglycolate and/or trimethylolpropantrithioglycolate.

**12.** Thio-epoxy resin according to one of the preceding claims, wherein the thio-epoxy resins are foamed thio-epoxy resins with densities by volume of 5 to 100 $kg/m^3$, preferably 20 to 60 $kg/m^3$, particularly preferably 10 to 50 $kg/m^3$.

**13.** Use of the thio-epoxy resin according to at least one of claims 1 to 11, wherein the cellular thio-epoxy resins have

densities by volume of greater than 100 to 600 kg/$m^3$ or use as elastomers or seals, in particular profile seals, with a density by volume of greater than 100 to 600 kg/$m^3$.

**14.** Use of the thio-epoxy resin according to at least one of claims 1 to 11 as a microcellular casting compound with a density by volume of greater than 600 to 950 kg/$m^3$.

**15.** A method for the preparation of thio-epoxy resin by reacting at least

(a) one polyepoxide compound having at least two epoxide groups per molecule containing aromatic and/or cycloaliphatic groups,
(b) one aliphatic epoxide compound having at least 14 carbon atoms containing at least one epoxide group, and
(c) at least one polythiol compound having at least two mercaptan groups in the presence of
(d) at least one base as catalyst, and
(e) at least one carbonate compound (e1) or a physical propellant (e2) or both, wherein the physical propellants used are substances which change from the liquid or dissolved state to the gaseous state at -10 to 80°C,

wherein a cellular or foamed thio-epoxy resin is obtained.

**16.** The method according to claim 15, wherein at least components (a) to (e) are reacted at temperatures of 5 to 150°C, in particular 10 to 45°C.

**Revendications**

**1.** - Résine thio-époxyde apte à être obtenue par la réaction d'au moins :

a) un composé polyépoxyde ayant au moins deux groupes époxyde par molécule présentant des groupes aromatiques et/ou cycloaliphatiques ;
b) un composé époxyde aliphatique ayant au moins 14 atomes de carbone présentant au moins un groupe époxyde ; et
c) au moins un composé polythiol ayant au moins deux groupes mercaptan,

en présence de :

d) au moins une base comme catalyseur ; et
e) au moins un composé carbonate (e1) ou un agent porogène physique (e2) ou les deux,
où, comme agent porogène physique, sont utilisées des substances qui passent de l'état liquide ou dissous à l'état gazeux à -10 à 80°C,
une résine thio-époxyde cellulaire ou expansée étant obtenue.

**2.** - Résine thio-époxyde selon la revendication 1, dans laquelle au moins l'agent porogène physique (e2) est utilisé ou au moins le composé carbonate (e1) et l'agent porogène physique (e2) sont utilisés.

**3.** - Résine thio-époxyde selon la revendication 1, dans laquelle ont réagi :

(a) 10 à 65 parties en poids du composé polyépoxyde ;
(b) 5 à 70 parties en poids du composé époxyde aliphatique ;
(c) le composé polythiol en une quantité telle qu'il en résulte un indice de 50 à 120, en particulier de 70 à 100, en présence de
(d) 0,001 à 5 parties en poids du catalyseur ou mélange de catalyseurs basique ; et

(e1) 0,2 à 35 parties en poids, de préférence 5 à 20 parties en poids, du composé carbonate et/ou
(e2) de l'agent porogène physique.

**4.** - Résine thio-époxyde selon au moins l'une des revendications précédentes, dans laquelle le composé époxyde aliphatique (b) est une huile naturelle époxydée, en particulier l'huile de lin époxydée, l'huile de soja époxydée, l'huile de colza époxydée, l'huile de tall époxydée ou l'huile d'arachide époxydée.

**5.** - Résine thio-époxyde selon au moins l'une des revendications précédentes, dans laquelle, comme composé carbonate, est utilisé au moins un monocarbonate, en particulier le carbonate d'éthylène, le carbonate de propylène et/ou le carbonate de glycérol.

**6.** - Résine thio-époxyde selon au moins l'une des revendications précédentes, dans laquelle, comme composé carbonate, est utilisé au moins un polycarbonate, en particulier les polycarbonate diols, le biscarbonate de diglycérol, le tricarbonate de diglycérol ou le biscarbonate de dipentaérythritol.

**7.** - Résine thio-époxyde selon au moins l'une des revendications précédentes, dans laquelle, comme au moins une base, sont utilisées des amines, en particulier choisies parmi un ou plusieurs membres du groupe :

fluorure de tétrabutylammonium, 1,8-diazabicyclo-undécène (DBU), tétraméthylguanidine (TMG), hexaméthylbiguanide, diazabicycloalcènes, diazabicyclooctane (DABCO), composés de guanidine et d'imidazole,
en particulier des mélanges d'amines contenant au moins deux membres du groupe tétraméthylguanidine, N-méthyléthanolamine, 1,8-diazabicyclo-undécène et diméthylaminopropyldipropanolamine.

**8.** - Résine thio-époxyde selon au moins l'une des revendications précédentes, dans laquelle, comme au moins une base, sont utilisés des sels de métaux alcalins, en particulier choisis parmi un ou plusieurs membres des groupes :

(a) hydroxydes de métaux alcalins ;
(b) sels de métaux alcalins d'acides mercaptocarboxyliques ;
(c) carboxylates de métaux alcalins, en particulier formiates, acétates, propionates, butyrates, oléates, tallowates et/ou dodécanoates,

les métaux alcalins étant, de préférence, le lithium, le sodium et/ou le potassium.

**9.** - Résine thio-époxyde selon l'une des revendications 7 ou 8, dans laquelle au moins une amine et au moins un sel de métal alcalin sont utilisés conjointement, en particulier lorsqu'au moins un composé carbonate est utilisé comme agent porogène.

**10.** - Résine thio-époxyde selon au moins l'une des revendications précédentes, dans laquelle, comme agent porogène physique (e2), sont utilisés du $CO_2$, en particulier dissous, des hydrocarbures halogénés ayant 1 à 5 atomes de carbone ou des hydrocarbures en C3 à C5.

**11.** - Résine thio-époxyde selon l'une des revendications précédentes, dans laquelle, comme composé polythiol, sont utilisés des bis-thiols, des tri-thiols ou des tétra-thiols ou des hexa-thiols, de préférence le pentaérythrittétrathiol, le triméthylolpropane thiol, le tétra(3-mercaptopropionate) de pentaérythritol, le tri (3-mercaptopropionate) de triméthylolpropane, le tétrathioglycolate de pentaérythritol et/ou le trithioglycolate de triméthylolpropane.

**12.** - Résine thio-époxyde selon l'une des revendications précédentes, dans laquelle les résines thio-époxyde sont des résines thio-époxydes expansées ayant des masses volumiques de 5 à 100 kg/$m^3$, de préférence de 20 à 60 kg/$m^3$, de manière particulièrement préférée de 10 à 50 kg/$m^3$.

**13.** - Utilisation des résines thio-époxydes selon au moins l'une des revendications 1 à 11, dans laquelle les résines thio-époxydes cellulaires présentent des masses volumiques de plus de 100 à 600 kg/$m^3$ ou utilisation en tant qu'élastomères ou garnitures d'étanchéité, en particulier joints d'étanchéité profilés, ayant une masse volumique de plus de 100 à 600 kg/$m^3$.

**14.** - Utilisation des résines thio-époxydes selon au moins l'une des revendications 1 à 11 comme masse de scellement microcellulaire présentant une masse volumique de plus de 600 à 950 kg/$m^3$.

**15.** - Procédé de préparation de résine thio-époxyde par réaction d'au moins :

(a) un composé polyépoxyde ayant au moins deux groupes époxyde par molécule présentant des groupes aromatiques et/ou cycloaliphatiques ;
(b) un composé époxyde aliphatique ayant au moins 14 atomes de carbone présentant au moins un groupe époxyde ; et
(c) au moins un composé polythiol ayant au moins deux groupes mercaptan,

en présence de :

(d) au moins une base comme catalyseur ; et
(e) au moins un composé carbonate (e1) ou un agent porogène physique (e2) ou les deux,
où, comme agent porogène physique, sont utilisées des substances qui passent de l'état liquide ou dissous à l'état gazeux à -10 à 80°C,
une résine thio-époxyde cellulaire ou expansée étant obtenue.

**16.** - Procédé selon la revendication 15, dans lequel on fait réagir au moins les composants (a) à (e) à des températures de 5 à 150°C, en particulier de 10 à 45°C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2789958 A
- US 3355512 A
- WO 2013053100 A
- EP 0870790 A1
- DE 102012223515 A1
- WO 2014072334 A1
- WO 2012095517 A